# EUROPÄISCHE PATENTSCHRIFT

(11) **EP 1 768 222 B1**
(45) Veröffentlichungstag und Bekanntmachung des Hinweises auf die Patenterteilung: **20.03.2019**
(21) Anmeldenummer: 06019124.4
(22) Anmeldetag: 13.09.2006
(51) Int. Cl.: H02H 7/08, H02H 7/093, F04D 27/02

(54) **Drehzahlüberwachungsvorrichtung**
Apparatus for monitoring the rotational speed
Appareil pour la surveillance de la vitesse de rotation

(30) Priorität: 22.09.2005 DE 102005045284
(43) Veröffentlichungstag der Anmeldung: 28.03.2007
(73) Patentinhaber: PFEIFFER VACUUM GMBH, 35614 Asslar (DE)
(72) Erfinder: Losch, Wolfgang, 35080 Bad Endbach (DE); Müller, André, 35606 Solms (DE)
(74) Vertreter: Manitz Finsterwald Patentanwälte PartmbB

(56) Entgegenhaltungen:
- EP-A- 1 211 774
- EP-A- 1 311 047
- DE-A1- 10 026 707
- US-B1- 6 236 183

## Beschreibung

Die Erfindung betrifft eine Vorrichtung zur redundanten Drehzahlüberwachung eines sinusförmig, sensorlos kommutierten Synchronmotors mit permanentmagnetisch erregtem Rotor, welche eine erste Steuereinheit, eine Antriebsendstufe und eine Mehrzahl von Antriebsphasen aufweist.

In einer Vielzahl von Anwendungen haben sich sensorlose und sinusförmig kommutierte Synchronmotore mit permanentmagnetisch erregtem Rotor durchgesetzt. Einer der Vorteile gegenüber anderen Systemen, wie beispielsweise blockkommutierte Antriebe, liegt in dem sehr gleichmäßigen Verlauf des durch das drehende Feld erzeugten Drehmomentes. Daher erzeugt diese Art Antriebe wesentlich weniger Vibrationen, was in vielen Anwendungen erwünscht oder gar Vorraussetzung ist.

Oftmals werden diese Antriebe in Maschinen eingesetzt, welche Sicherheitsbestimmungen genügen müssen. Dazu gehört zum einen, dass die Drehzahl überwacht werden muss und einen maximalen Wert nicht überschreiten darf. Zum anderen muss diese Überwachung sicher gegen Fehlfunktion der Überwachungseinheit sein. Im Stand der Technik ist es üblich, eine Überwachung der Drehzahl über einen eigens installierten Drehzahlsensor durchzuführen. Dies ist dadurch bedingt, dass im Gegensatz zur Blockkommutierung bei der sinusförmigen Bestromung zu jedem Zeitpunkt alle Phasen bestromt sind. Während es bei Blockkommutierung möglich ist, den Drehzahlsensor (beispielsweise ein Hallsensor oder ein Hall-IC) dadurch zu vermeiden, dass die in der jeweils unbestromten Spule induzierte Spannung gemessen wird, entfällt dieser Lösungsweg bei sinusförmiger Bestromung.

Der Nachteil dieser Sensoren ist, dass sie erstens ein zusätzliches Bauteil im Bereich des Antriebes darstellen. Das bedeutet unter anderem, dass Kabel und Steckverbindungen vorgesehen werden müssen, um den Sensor auswerten zu können. Das zweite Problem ist, dass solche Sensoren störanfällig sind, weshalb eine Mehrzahl von ihnen vorgesehen werden muss, um eine wirklich zuverlässige Überwachung realisieren zu können. Zudem sind die Sensorbauteile empfindlich gegen chemische Einwirkungen und störanfällig gegen elektromagnetische oder radioaktive Einflüsse.

Die EP-A-1211774 stellt eine Vorrichtung zur Ansteuerung eines geberlosen Drehstromantriebs vor. Sie schlägt vor, zwei annäherend redundante Systeme vorzusehen, die Steuersatzsignale zur Ansteuerung eines Wechselrichters erzeugen. Diese Steuersatzsignale werden in zwei Überwachungselektroniken miteinander verglichen. Bei Fehlererkennung erfolgt zweikanaliges Abschalten der Endstufe durch diese Überwachungselektroniken.

Die Aufgabe ist es daher, eine Vorrichtung zur redundanten Drehzahlüberwachung eines sinusförmig, sensorlos kommutierten Synchronmotors vorzustellen, die die vorgenannten Nachteile vermeidet.

Gelöst wird diese Aufgabe durch eine Vorrichtung mit den Merkmalen des ersten Patentanspruches.

Dadurch, dass eine zweite Steuereinheit eine elektrische Größe mindestens einer Antriebsphase überwacht, kann auf einen Drehzahlsensor jeglicher Art verzichtet werden. Dies beseitigt ein störanfälliges Bauteil, wodurch die Sicherheit entscheidend erhöht und überdies noch Kosten eingespart werden können.

Die Merkmale der Ansprüche 2 bis 5 stellen vorteilhafte Weiterbildungen der Erfindung dar.

In einer ersten Weiterbildung ist die überwachte elektrische Größe die durch die Antriebsendstufe an den Motor angelegte Spannung in mindestens einer Phase. Die Messung dieser elektrischen Größe ist besonders einfach, was den nötigen Aufwand gering hält.

In einer anderen Weiterbildung ist die überwachte elektrische Größe der sich in der betreffenden Antriebsphase einstellende Strom. Dies ist zwar aufwändiger als die vorgenannte Lösung, hat aber als Vorteil, dass sich Ströme aufgrund der Wechselwirkung der Endstufe mit dem Motor selbst einstellen und somit durch die Strommessung auch der Einfluss des Motors berücksichtigt wird.

Eine weitere Ausführungsform bezieht sich auf den Signalweg von der Messung der elektrischen Größe zur zweiten Steuereinheit. Vorteilhaft ist es, das Messsignal von einem Signalumformer umformen zu lassen, der in der ersten Steuereinheit angeordnet ist und von welchem das Signal dann an die zweite Steuereinheit geführt wird. Die Umformung geschieht so mit derselben Zeitbasis wie die Rechnung des Motormodells, womit Fehler durch unterschiedlichen Zeitbasen vermieden und ein Abgleich von Zeitbasen unnötig wird.

Die Sensorlosigkeit wirkt sich besonders günstig beim Einsatz der Vorrichtung in einer Vakuumpumpe mit schnelldrehendem Rotor aus. Solche Vakuumpumpen sind beispielsweise Turbomolekularpumpen, die oftmals in schwierigen chemischen und physikalischen Umfeldern eingesetzt werden. Aus diesen und aus Kostengründen ist es wichtig, die Zahl der elektronischen Bauteile innerhalb der Vakuumpumpe zu minimieren. Außerdem muss bei diesen Vakuumpumpen eine sichere Drehzahlüberwachung gewährleistet sein, da in dem schnell drehenden Rotor eine enorme kinetische Energie gespeichert ist. Sollte diese im Falle einer Fehlfunktion frei werden, muss das Gehäuse der Vakuumpumpe diese Energie absorbieren. Da die Energie von der Drehzahl abhängt, muss die Drehzahl effizient und sicher auf einen Maximalwert begrenzt werden, um das Gehäuse noch sicher genug bauen zu können.

Anhand von Ausführungsbeispielen soll die Erfindung erläutert und die Vorteile vertieft werden.

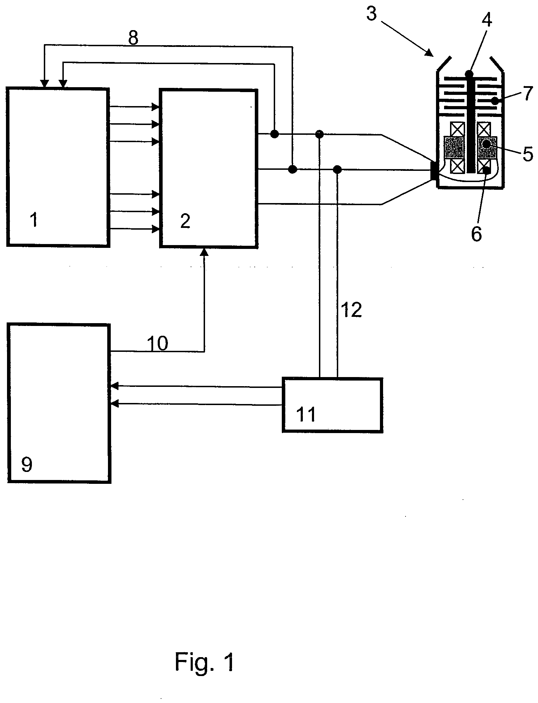

Fig. 1: Prinzipschaltbild eines ersten Ausführungsbeispiels
Fig. 2: Prinzipschaltbild eines zweiten Ausführungsbeispiels
Fig. 3: Prinzipschaltbild eines dritten Ausführungsbeispiels

Alle Ausführungsformen weisen folgende Komponenten auf, die mit Verweis auf die erste Abbildung erläutert werden, bei den anderen Abbildungen aber genauso gelten. Eine erste Steuereinheit 1 stellt die eigentliche Antriebssteuereinheit dar. In ihr läuft ein sogenanntes Motormodell ab, welches aufgrund der physikalischen Parameter des Motors die Kommutierung berechnet. Weiterhin führt diese Steuereinheit eine Stromregelung durch, in dem sie die Ströme von zwei Motorphasen über eine Mehrzahl von Leitungen 8 auswertet. Die Messung des Stromes ist hier nur zur Vereinfachung als Punktmessung und ohne weitere Schaltungsdetails dargestellt. Die erste Steuereinheit sorgt für das Anschleppen des Motors von Nulldrehzahl auf nominelle Drehzahl. In ihr läuft eine erste Drehzahlüberwachung, die bei Erkennen einer zu hohen Motordrehzahl den Antrieb stoppt. Der Einsatz eines Motormodells fußt auf der Erkenntnis, dass sich der permanentmagnetisch erregte Rotor eines Synchronmotor nur mit der Drehzahl drehen kann, mit der das erregende Feld dreht, welches die Motorspulen erzeugen. Die erste Steuereinheit gibt die Kommutierungssignale an die Antriebsendstufe 2. In ihr wird die durch die Netzspannungsversorgung gegebene Leistung entsprechend der vom Motormodell errechneten Kommuntierungssignale auf die einzelnen Motorphasen aufgeschaltet. Schematisch dargestellt ist eine Vakuumpumpe 3 mit einem schnelldrehenden Rotor 4, einem Pumpstator 7, die beide Schaufeln tragen, welche im Zusammenspiel eine Pumpwirkung erzeugen. Der Rotor ist in Lagern 6 gelagert und der Antrieb 5 als permanentmagnetisch erregter Synchronmotor (PMSM) ausgebildet. Als weitere Bestandteile weist die Vorrichtung eine zweite Steuereinheit 9 auf, welche die Rotordrehzahl überwacht und bei Vorliegen einer nicht mehr tolerierbaren Abweichung über eine Leitung 10 den Antriebsendstufe abschaltet. Die Drehzahlüberwachung fußt auf den von einem Signalumsetzer zugeführten Informationen.

In einer ersten Ausführungsform misst der Signalumsetzer zwei der an die Motorphasen angelegten Spannungen über die Leitungen 12.

In einer zweiten Ausführungsform misst der Signalumsetzer über die Leitungen 12 zwei der sich in den Motorphasen einstellenden Ströme.

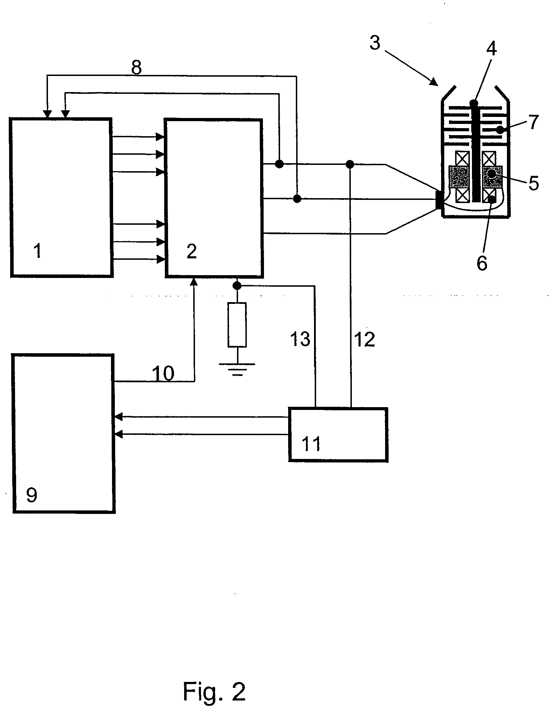

Ein weiteres Ausführungsbeispiel zeigt Abbildung 2. Der Signalumsetzer 11 misst zwei Signale: Zum einen eine elektrische Größe einer Phase (Spannung oder Strom) und zum anderen über Leitung 13 den Summenstrom aller Phasen. Dies fußt darauf, dass die Addition der drei Sinusströme, die am gemeinsamen Fußpunkt vorliegen muss, keine Konstante ergibt. Vielmehr bleibt eine Welligkeit, in der die Frequenz der drei Sinussignale und damit auch die Drehfrequenz des Rotors vorhanden ist. Wieder gibt der Signalumsetzer 11 das Signal an die zweite Steuereinheit 9, die im Falle einer Drehzahlabweichung, beispielsweise eine Überschreitung der maximalen Drehzahl oder eine erhebliche Abweichung der Ist- von der Solldrehzahl, die Antriebsendstufe 6 abschaltet.

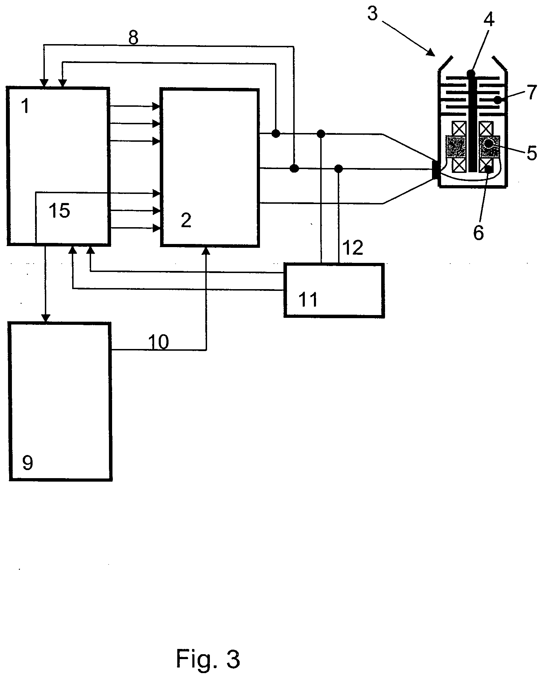

Das in Abbildung 3 gezeigte Ausführungsbeispiel weist als Besonderheit einen Signalumformer 15 auf. Dieser kann ein eigenes Bauteil sein, vorteilhafter ist es jedoch, ihn in der ersten Steuereinheit 1 anzuordnen. Durch diesen Signalumformer ist es besonders leicht möglich, eine Potenzialtrennung zwischen dem Antriebsstrang, welcher aus erster Steuereinheit, Antriebsendstufe und Motor aufgebaut ist, und der zweiten Steuereinheit vorzunehmen. Dies ist wünschenswert, weil der Antriebsstrang aufgrund der Leistungseinkopplung auf hohem Potenzial betrieben wird. Das umgeformte Signal wird dann über mindestens eine Leitung 16 der zweiten Steuereinheit zugeführt.

Weiterbildungen der Erfindung sind denkbar. So können die Steuereinheiten sowohl als programmierbare Mikrokontroller als auch als Steuer-IC's ausgebildet sein. In letzteren ist das Motormodell und die weiteren Funktionen statisch eingebaut. Zwischen den Steuereinheiten kann ein Datenaustausch stattfinden, in dem Daten über den Motor selbst, über Drehzahlgrenzen und Ist-/Sollwerte ausgetauscht werden. Je nach Auslastung der Rechenkapazität kann die zweite Steuereinheit Zusatzaufgaben übernehmen, die mit der Peripherie der Vakuumpumpe 3 zu tun haben, beispielsweise die Kontrolle eines Feldbusses oder eines Temperaturmanagementsystems.

## Patentansprüche

1. Vorrichtung zur redundanten Drehzahlüberwachung eines sinusförmig, sensorlos kommutierten Synchronmotors mit permanentmagnetisch erregtem Rotor, welche eine erste Steuereinheit (1), eine Antriebsendstufe (2) und eine Mehrzahl von Antriebsphasen aufweist, **dadurch gekennzeichnet, dass** sie eine zweite Steuereinheit (9) aufweist, welche zur Drehzahlüberwachung eine elektrische Größe mindestens einer der Antriebsphasen überwacht, und eine Verbindung (10) zwischen zweiter Steuereinheit und Antriebsendstufe besteht, über welche die zweite Steuereinheit die Antriebsendstufe bei Erkennen eines fehlerhaften Drehzahlzustandes abschaltet.

2. Vorrichtung nach Anspruch 1, **dadurch gekennzeichnet, dass** die überwachte elektrische Größe die an die betreffende Antriebsphase angelegte Spannung ist.

3. Vorrichtung nach Anspruch 1, **dadurch gekennzeichnet, dass** die überwachte elektrische Größe der sich in der betreffenden Antriebsphase einstellende Strom ist.

4. Vorrichtung nach einem der vorhergehenden Ansprüche, **dadurch gekennzeichnet, dass** das der elektrische Größe entsprechenden Messsignal einem in der ersten Steuereinheit (1) angeordneten Signalumformer (15) zugeführt wird und das umgeformte Signal der zweiten Steuereinheit (9) über eine Verbindung (16) zugeführt wird.

5. Vorrichtung nach einem der vorhergehenden Ansprüche, **dadurch gekennzeichnet, dass** die Vorrichtung als Antrieb einer Vakuumpumpe (3) mit schnelldrehendem Rotor (4) dient.

## Claims

1. An apparatus for a redundant monitoring of the speed of rotation of a synchronous motor which is commutated in a sinusoidal and sensorless manner and which has a permanent magnetically excited rotor, said apparatus comprising a first control unit (1), a drive end stage (2) and a plurality of drive phases, **characterized in that** it has a second control unit (9) which monitors an electrical value of at least one of the drive phases in order to monitor the speed of rotation; and **in that** there is a connection (10) between the second control unit and the drive end stage via which the second control unit switches off the drive end stage on the recognition of an erroneous speed of rotation state.

2. An apparatus in accordance with claim 1, **characterized in that** the monitored electrical value is a voltage applied to the respective drive phase.

3. An apparatus in accordance with claim 1, **characterized in that** the monitored electrical value is a current which is adopted in the respective drive phase.

4. An apparatus in accordance with any one of the preceding claims, **characterized in that** a measured signal corresponding to the electrical value is supplied to a signal converter (15) arranged in the first control unit (1); and **in that** the converted signal is supplied to the second control unit (9) via a connection (16).

5. An apparatus in accordance with any one of the preceding claims, **characterized in that** the apparatus serves as a drive of a vacuum pump (3) having a fast-rotating rotor (4).

## Revendications

1. Dispositif pour la surveillance redondante de la vitesse de rotation d'un moteur synchrone à commutation sinusoïdale sans capteur et pourvu d'un rotor excité par aimant permanent, comportant une première unité de commande (1), un étage final d'entraînement (2) et une pluralité de phases d'entraînement,
**caractérisé en ce que**
il comprend une seconde unité de commande (9) qui surveille une grandeur électrique de l'une au moins des phases d'entraînement pour la surveillance de la vitesse de rotation, et
il existe une connexion (10) entre la seconde unité de commande et l'étage final d'entraînement, via laquelle la seconde unité de commande désactive l'étage final d'entraînement lors de la détection d'un état défectueux relatif à la vitesse de rotation.

2. Dispositif selon la revendication 1,
**caractérisé en ce que**
la grandeur électrique surveillée est la tension appliquée à la phase d'entraînement correspondante.

3. Dispositif selon la revendication 1,
**caractérisé en ce que**
la grandeur électrique surveillée est le courant qui s'établit dans la phase d'entraînement correspondante.

4. Dispositif selon l'une des revendications précédentes,
**caractérisé en ce que**
le signal de mesure correspondant à la grandeur électrique est amené à un convertisseur de signal (15) agencé dans la première unité de commande (1), et le signal converti est amené à la seconde unité de commande (9) via une connexion (16).

5. Dispositif selon l'une des revendications précédentes,
**caractérisé en ce que**
le dispositif sert d'entraînement d'une pompe à vide (3) à rotor (4) tournant rapidement.
